# EUROPEAN PATENT SPECIFICATION

(11) **EP 4 168 794 B1**
(45) Date of publication and mention of the grant of the patent: **04.03.2026**
(21) Application number: 21733937.3
(22) Date of filing: 14.06.2021
(51) Int. Cl.: G01N 30/60

(54) **CHROMATOGRAPHY COLUMN**
CHROMATOGRAPHIESÄULE
COLONNE DE CHROMATOGRAPHIE

(30) Priority: 23.06.2020 GB 202009557
(43) Date of publication of application: 26.04.2023
(73) Proprietor: Cytiva Sweden AB, 751 84 Uppsala (SE)
(72) Inventor: NORRMAN, Per, 751 84 Uppsala (SE)
(74) Representative: Wu, Ping
(86) International application number: PCT/EP2021/065962
(87) International publication number: WO 2021/259689

(56) References cited:
- US-A1- 2012 037 555
- US-A1- 2019 154 639
- US-B2- 7 820 042
- US-B2- 8 133 395

## Description

### TECHNICAL FIELD OF THE INVENTION

The present invention relates to a chromatography column, a method for priming a chromatography column and to a method for unpacking a chromatography column.

### BACKGROUND

Chromatography columns provide a means for separating, purifying and isolating chemical and biological compounds. The size and type of column used in these operations typically depends upon the scale of the process in question, small glass or plastic walled columns typically being used for research purposes, while larger metal columns are employed for industrial processes. For instance, chromatography columns may be used in manufacturing processes to purify process liquids and separate substances of interest from such liquids; typical examples include large-scale preparative purification of fine chemicals and pharmaceuticals, together with biological products.

Whilst the present invention relates to both plastic walled and larger metal walled chromatography columns, it is particularly useful for manufacturing and industrial-scale chromatography columns. Industrial-scale chromatography columns typically comprise a hollow, axially vertical tubular housing including a liquid inlet at the upper end and through which the buffer and substances to be separated are dispensed to the media bed located within the cavity of the tube, and a liquid collecting system at the lower end for collecting substances and buffer. The particulate chromatographic media or bed through which the buffer fluid and/or substances to be separated and purified percolates is located between the liquid inlet and collecting system.

An adapter assembly is typically affixed to the upper end of the tubular housing and a base assembly to the lower end where it is bolted to bottom flanges. Each of these assemblies typically comprises a strong backing plate and a distributor plate which further supports a bed support; a bed support is a layer of mesh, screen, filter, sinter or other fluid-permeable media-retaining material which permits process liquid flow into and out of the chromatography bed space or cavity while retaining the bed of particulate medium. To provide adjustability and control of the bed height and bed compression, the adapter assembly is typically made in the form of a piston or sliding adapter in the column tube interior. After the column is charged with bed media, typically through a valve or nozzle, the adapter may be forced toward the bottom of the tube to compress or pressurize the media bed. Generally, the base assembly is a fixed structure which is bolted against a bottom flange of the column tube but, in some instances, may also be in the form of a movably slidable piston or adapter.

The backing plate of the base assembly generally acts as a support for the column, being itself supported on legs or some other stand arrangement, which allows clearance for outlet pipework projecting beneath the base assembly.

Liquid chromatography is a technique for separating the individual compounds that exist in a sample. In employing the technique, the sample is dissolved and carried in a liquid, called a mobile phase. The mobile phase carrying the sample is forced to migrate through a bed of particulate media, sometimes called a stationary phase. Different compounds will have differing rates of migration through the media, which effects the separation of the components in the sample. The bed of particulate media is formed under gravity, washing with a mobile phase, and/or by compression by an adapter or piston. Before a column can be used to separate compounds by liquid chromatography and before the column is filled with chromatography resin it is necessary to remove air from the bed space which has become trapped in the column otherwise the air will interfere with the separation process. The air may have been originally present in the bed space itself or have moved into the bed space from associated tubing, pumps or column components such as a bed support. Problems are often encountered in trying to remove the air from the column prior to conducting liquid chromatography. The trapped air may create air pockets in the stationary phase where chemical interaction between the sample and the media cannot take place. These air pockets thus negatively affect the separation of the different components in the sample.

US 7,820,042 B2 discloses a chromatography column which is specifically designed for allowing air which has been trapped within the bed space to be removed. An elongated groove is provided in an inner wall of the tubular side wall of the housing of the chromatography column.

A problem in a chromatography column according to the one described in US 7,820,042 B2 is that the whole column needs to be filled up with pure water during the priming process in order to get rid of the possibly trapped air. This process is both time consuming and requires a large amount of pure water.

### SUMMARY

An object of the present invention is to improve and facilitate priming of a chromatography column.

A further object of the invention is to improve the possibilities to remove all the slurry from the column during unpacking.

These objects are addressed by a chromatography column, a method for priming a chromatography column and a method for unpacking the chromatography column according to independent claim 1.

Hereby a chromatography column is provided in which trapped air can be removed by lowering the adaptor to a priming position in a lower half of the column, where the groove is positioned in the inner wall. When the adaptor is positioned in the priming position which is in line with the groove, i.e. the adaptor is aligned to intersect with at least a part of the groove, a priming liquid is provided into a comparatively small compartment provided between the adaptor and the base assembly. Priming liquid is provided until any possible air has passed the adaptor assembly via the at least one groove. Alternatively, when the bed space between the adaptor assembly and the base assembly has been filled with priming liquid, the adaptor can be pushed a small distance downwards thereby forcing some of the priming liquid together with any possible air to pass the adaptor assembly via the at least one groove. Thanks to the comparatively low position of the at least one groove in the chromatography column wall, close to the base assembly, a very small amount of priming liquid is needed compared to previous methods where the whole column had to be filled up for performing the priming. This both saves time and costs. A further advantage with a groove positioned in a lower half of the column is that the groove can be used for flowing a fluid from outlets which are provided around the circumference of the adaptor assembly. Such a flow of a fluid can then pass the adaptor assembly via the at least one groove and hereby flow into the bed space. This can be used during unpacking of the chromatography column. Any possibly remaining chromatography material can be flushed out by this flow. This is much more useful when the groove is provided close to the base assembly compared to prior art where the groove was provided in an upper part of the column.

In one embodiment of the invention the at least one groove is provided within a distance from the base assembly which is less than 20 cm or less than 10 cm.

In one embodiment of the invention the at least one groove is a continuous groove around the circumference of the inner wall.

In one embodiment of the invention there are a number of separate grooves distributed around the circumference of the inner wall.

In one embodiment of the invention the at least one groove is provided as a continuous spiral groove provided around the circumference of the inner wall, starting less than 20 cm from the base assembly and ending less than 15 cm from the base assembly.

The adaptor assembly comprises at least one priming fluid passage which is passing through the adaptor assembly, wherein each priming fluid passage has a first end opening which is provided at a position around the circumference of the adaptor assembly, whereby if there are more than one priming fluid passage provided, the first end openings for each of the priming fluid passages are distributed around the circumference of the adaptor assembly, whereby said at least one priming fluid passage is configured for transferring a fluid between an outside of the chromatography column and a circumference of the adaptor assembly.

In some embodiments of the invention said at least one first end opening of each of said at least one priming fluid passage is provided between two scarpers of the adaptor assembly which scrapers are sealing against the inner wall of the tubular side wall of the chromatography column.

In some embodiments the method for priming the chromatography column comprises a further step d) which is performed after step c), wherein said step d) comprises raising the adaptor assembly axially within the tubular side wall away from the base assembly such that the adaptor assembly is removed from the at least one groove whereby no more air or other fluid can pass the adaptor assembly.

In some embodiments of the method for unpacking the chromatography column the step of flowing a fluid through the at least one priming fluid passage further comprises simultaneously moving the adaptor assembly axially within the tubular side wall such that the adaptor assembly passes over a distance where the groove is provided, wherein the groove is provided as a spiral groove, whereby the flow of fluid out through the at least one first end openings is transferred out via the spiral groove into the bed space from different directions depending on the position of the adaptor assembly.

### BRIEF DESCRIPTON OF DRAWINGS

Figure 1a shows a chromatography column according to the invention in cross section.
Figure 1b shows a part of a chromatography column according to one embodiment of the invention in cross section.
Figure 2a shows schematically a part of a tubular side wall of a chromatography column according to one embodiment of the invention.
Figure 2b shows schematically a part of a tubular side wall of a chromatography column according to another embodiment of the invention.
Figure 2c shows schematically a part of a tubular side wall of a chromatography column according to another embodiment of the invention.
Figure 3a is a cross section of a chromatography column according to one embodiment of the invention.
Figure 3b is a cross section of the same chromatography column as shown in Figure 3a where the adaptor assembly has been lowered.
Figure 4 shows schematically a movable flow path around a bed support surface depending on height of adaptor assembly according to one embodiment of the invention.
Figure 5 is a perspective view of an adaptor assembly according to one embodiment of the invention.
Figure 6 is a flow chart of a method according to the invention
Figure 7 is a flow chart of another method according to the invention.

### DETAILED DESCRIPTION OF EMBODIMENTS

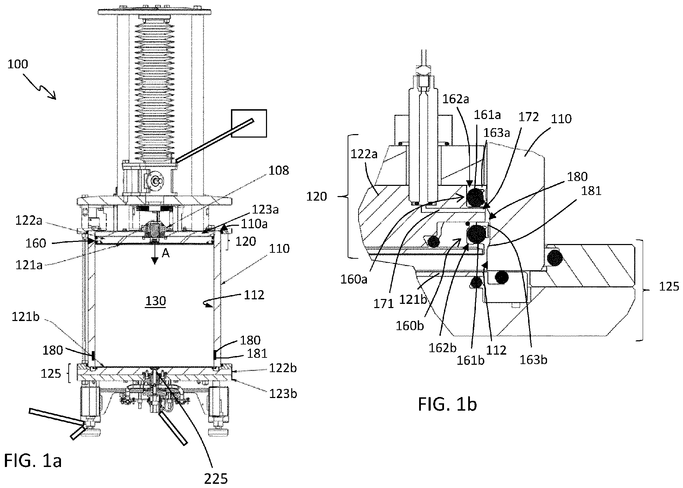

Figure 1a shows a chromatography column 100 according to the invention in cross section. The chromatography column 100 comprises an elongated tubular side wall 110 having an inner wall 112, an adapter assembly 120 and a base assembly 125. An enclosed bed space 130 is defined between said adaptor assembly 120, said base assembly 125 and said inner wall 112 of said tubular side wall 110. Said adaptor assembly 120 comprises a top inlet 108 and is axially movable inside said tubular side wall 110 in relation to said base assembly 125. A chromatography media inlet/outlet 225 is provided in the middle of said base assembly 125.

The adapter assembly 120 is a cylindrical disc type structure that operates by moving axially inside the centre of the tubular side wall 110 in the direction of arrow A. The disc circumference is such that it fits almost flush with the face of inner wall 112. The bed space 130 is designed to contain a bed of particulate media suspended in a liquid carrier. The adapter assembly 120 is used to settle the bed of particulate media, which is initially in the form of a slurry, by pushing down on it; the adapter assembly 120 may subsequently be used to compress and pack the particulate media to achieve a packed bed suitable for chromatographic separation. The volume of the media bed decreases as the adapter 120 is pushed down the column 100 (i.e. in the direction of arrow A in FIG. 1a) forcing the liquid carrier through the particulate media and out of the column via a port in the base assembly 125 or the adapter assembly 120.

In order to fully confine the carrier liquid and the particulate media it must be ensured that the solution cannot pass through the adapter assembly 120. A sealing assembly 160 provided at the circumference of the adapter assembly 120 is used to form a dynamic seal between the adapter assembly 120 and the inner wall 112. One example of a sealing assembly 160 is better seen in Figure 1b. In Figure 1b a part of the same chromatography column 100 as shown in Figure 1a is shown in cross section with the adaptor assembly 120 in a low position within the tubular side wall 110. In this embodiment the sealing assembly 160 comprises two sealing arrangements 160a, 160b, one upper sealing arrangement 160a comprising an upper O-ring 161a and an upper scraper 163a and a lower sealing arrangement 160b comprising a lower O-ring 161b and a lower scraper 163b. The upper O-ring 161a is located within an upper recess 162a in the circumference of the adapter assembly 120 and the lower O-ring 161b is located in a lower recess 163b in the circumference of the adapter assembly 120. The scrapers 163a, 163b also function as a brush to remove particulate media from the surface of the inner wall 112. The scrapers 163a, 163b are circular hoop-like structures mounted on the outer edge of the O-rings 161a, 161b where they are supported by the O-rings 161a, 161b and the adapter assembly 120 in a manner that allows it a radial degree of freedom. The compressed O-rings 161a, 161b act against the scrapers 163a, 163b to push them out against the tubular side wall 110 to create a fluid-tight seal. In another embodiment the two sealing arrangements 160a, 160b comprises a single sealing member such as an O-ring or an integrated scraper seal, i.e. a separate O-ring and scraper may not be necessary. In further another embodiment the sealing assembly 160 may comprise only one sealing arrangement, i.e. not both an upper and lower sealing arrangement but only one of them.

With reference to both Figure 1a and 1b some further details are now described. The adaptor assembly 120 comprises a top bed support 121a, a top distributor 122a and an adaptor backing plate 123a. The base assembly 125 comprises a bottom bed support 121b, a bottom distributor 122b and a bottom backing plate 123b.

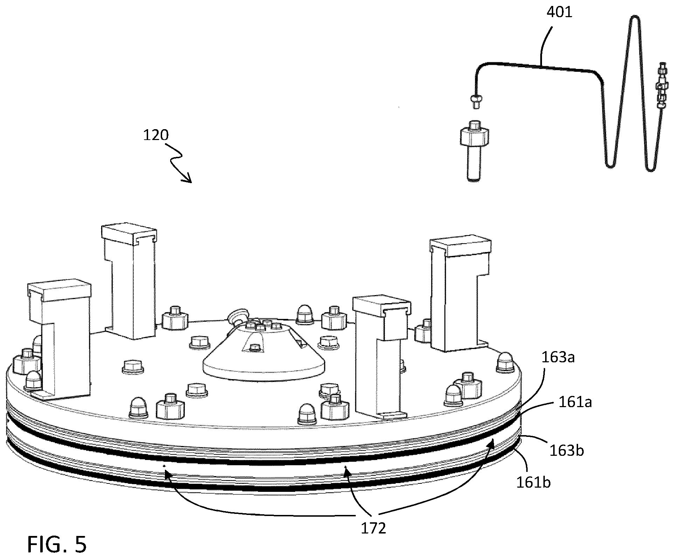

The adaptor assembly 120 comprises one or more priming fluid passages 171. One such priming fluid passage 171 can be seen in Figure 1b. The priming fluid passage 171 has a first end opening 172 which is provided at a position around the circumference of the adaptor assembly 120. If more than one priming fluid passages 171 are provided in the adaptor assembly 120 the different first end openings 172 for the different priming fluid passages 171 are distributed around the circumference of the adaptor assembly 120. The priming fluid passages 171 are configured for transferring a fluid between an outside of the chromatography column 100 and a circumference of the adaptor assembly 120. Hereby the priming fluid passages 171 can be connected to a source of liquid provided outside the chromatography column 100 via tubing 401 which can be seen in Figure 5. In the embodiment as shown in Figures 1a and 1b the first end openings 172 are provided in the adaptor assembly 120 between the upper and lower scrapers 163a, 163b of the upper and lower sealing arrangements 160a, 160b. The first end openings 172 may in some embodiments be provided closer to the upper sealing arrangement 160a than to the lower sealing arrangement 160b in order to better flush the area between the two sealing arrangements 160a, 160b.

According to the invention the inner wall 112 comprises at least one groove 180 via which groove 180 air and other fluid can pass the adaptor assembly 120 when the adaptor assembly is positioned in a priming position, wherein said priming position is a position where the adaptor assembly is provided in line with the groove 180 for allowing a passage of fluid. The at least one groove 180 is formed in the inner wall 112 such that when the lower sealing arrangement 160b is aligned to intersect with the at least one groove 180 there is formed at least one fluid passage between a volume of the chromatography column 100 provided below the adaptor assembly 120, i.e. the enclosed bed space 130, and the first end openings 172 of the fluid passages 171 in the adaptor assembly 120. The at least one groove is provided within a distance from the base assembly 125 such that the amount of priming liquid needed for priming the column can be limited. By providing the at least one groove 180 in a lower half of the column only a part of the column needs to be filled up with priming liquid during priming. The at least one groove 180 can be positioned in a lower half of the tubular side wall 110 of the chromatography column 100 where lower refers to a direction toward the base assembly 125, i.e. that the at least one groove 180 is provided closer to the base assembly 125 than to a top part 110a of the tubular side wall 110. In one embodiment the at least one groove 180 is positioned in a lower third or in a lower quarter of the tubular side wall. In some embodiments the at least one groove is positioned close to the base assembly 125 however giving place for a lower part of the adaptor to pass the at least one groove 180. In some embodiments of the invention the at least one groove 180 is positioned within a distance from the base assembly 125 which is less than 20 cm (e.g. 1, 2, 3, 4, 5, 6, 7, 8, 9, 10, 11, 12, 13, 14, 15, 16, 17, 18, 19 cm), and preferably within a few centimetres (e.g. about 3-5, about 3-10 cm). The at least one groove 180 may be substantially circumferential. Said at least one groove 180 may have an axial dimension thereto. For example, said at least one grove 180 may extend in the tubular side wall over an axial distance range. For example, such an axial distance range may be from about 2, 3, 4, or 5 to about 20 cm, about 2, 3, 4, or 5 to about 10 cm, about 2, 3, 4, or 5 to about 15 cm, about 10 to about 20 cm, about 10 to about 15 cm, about 15 to 20 about cm, etc. of the distance from the base assembly 125 within the chromatography column 100. The distance between the at least one groove 180 and the base assembly 125 can be measured between a bottom part 181 of the at least one groove 180 and a bottom bed support 121b of the base assembly 125 and the distance can be less than 20 cm or in another embodiment of the invention less than 10 cm or even less than 5 cm. The lower the position of the at least one groove 180 in the column is the less amount of priming liquid is needed for the priming and the less time will be required for the priming. Furthermore, during unpacking of the column a media bed can be effectively flushed out by providing a flow via the at least one groove and a low position of the groove may be more effective. When the adaptor assembly 120 is positioned in a low position, i.e. in the priming position which is in line with the at least one groove 180, the fluid flow provided via the fluid passages 171 can be effectively used for flushing out remaining parts of a media bed. The fluid flow will hereby be provided from a short distance and a high flow can be provided which will be effective for flushing out the media. With previous systems there have been problems getting rid of all chromatography media during unpacking. Furthermore, when more than one fluid passages 171 are provided in the adaptor assembly 120 the fluid flow can be increased in order to unpack and flush out the media bed even more effectively. However, for unpacking of some types of chromatography media the position of the at least one groove may suitably by a bit higher for being most effective. For some embodiments 10 cm or even 15 cm or 20 cm may be a suitable position of the groove. In Figure 1b the adaptor assembly 120 is positioned in line with said groove 180 and it can be seen that a passage is provided between the inner wall 112 of the tubular side wall 110 and a lower part of the adaptor assembly 120. Air and other fluid can pass the lower scraper 163b via the groove 180 and get into the first end opening 172 of the priming fluid passage 171. This is done during a priming of the chromatography column.

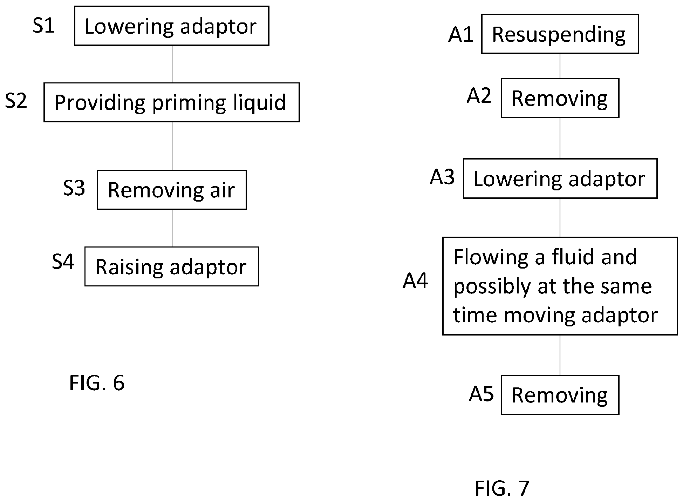

A method for priming a chromatography column as described above is also provided according to the invention. The method steps are shown in the flow chart of Figure 6. The method comprises the steps of:
S1: Lowering the adaptor assembly 120 to a priming position within the tubular side wall 110, which priming position is a position where the adaptor assembly 120 is in line with the at least one groove 180 of the inner wall 112 such that air and other fluid can pass the adaptor assembly 120 via said at least one groove 180.
S2: Providing a priming liquid to fill up the enclosed bed space 130 with priming liquid. The priming liquid could be water, for example purified water, or a buffer. The priming liquid is provided through the inlet/outlet 225 in the bottom of the column or through a bottom mobile phase (not seen in these figures).
S3: Removing air by providing more priming liquid to the enclosed bed space 130 such that air can pass the adaptor assembly 120 via the at least one groove 180 and further through the one or more priming fluid passages 171 and/or by lowering the adaptor assembly 120 axially within the tubular side wall 110 such that air can be pressed out via the at least one groove 180 and further through the one or more priming fluid passages 171.

Possibly the method further comprises the step:
S4: Raising the adaptor assembly 120 axially within the tubular side wall 110 away from the base assembly 125 such that the adaptor assembly 120 is removed from the at least one groove 180 whereby no more air or other fluid can pass the adaptor assembly 120. Hereby a sealed bed space 130 free from air is achieved. During this step the flow rate of priming fluid into the enclosed bed space 130 is kept higher than a corresponding rate of the adaptor movement, i.e. a fluid flow rate measured in cm/h of the column height (i.e. depending on the column cross section area) is kept higher than the adaptor movement measured in cm/hour along the column tube height. Hereby a sealed bed space free from air is ensured.
S5: After the priming of the column a step of introducing slurry into the column is usually provided for packing a media bed from the slurry in the column. Slurry is introduced via the chromatography media inlet/outlet 225.

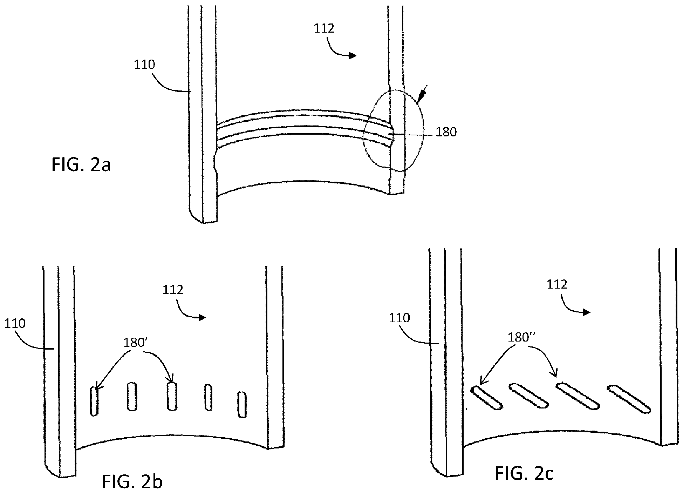

Figure 2a shows schematically a part of a tubular side wall 110 of a chromatography column according to one embodiment of the invention. One continuous groove 180 is in this embodiment provided around the circumference of the inner wall 112 of the tubular side wall 110. The groove 180 is provided in a lower part of the tubular side wall 110, i.e. in a part of the side wall 110 which is provided closer to a base assembly 125 of the chromatography column 100 than to a top of the tubular side wall 100. A width of the groove 180, i.e. an extension along the height of the inner wall 112 of the tubular side wall 110, should not be larger than a distance between the upper and lower sealing arrangements 160a, 160b. The width and depth of the groove 180 need to be sufficient to let fluid pass when the upper or lower sealing arrangement 160a, 160b is positioned in line with the groove 180. In one embodiment of the invention the width of the groove 180 can for example be between 5-60 mm.

Figures 2b and 2c show schematically a part of a tubular side wall 110 of two chromatography columns according to two other embodiments of the invention. A number of separate grooves 180', 180'' are in these two embodiments distributed around a circumference of the inner wall 112 of the tubular side wall 110. The separate grooves 180', 180'' can be straight or angled as shown in Figures 2b and 2c.

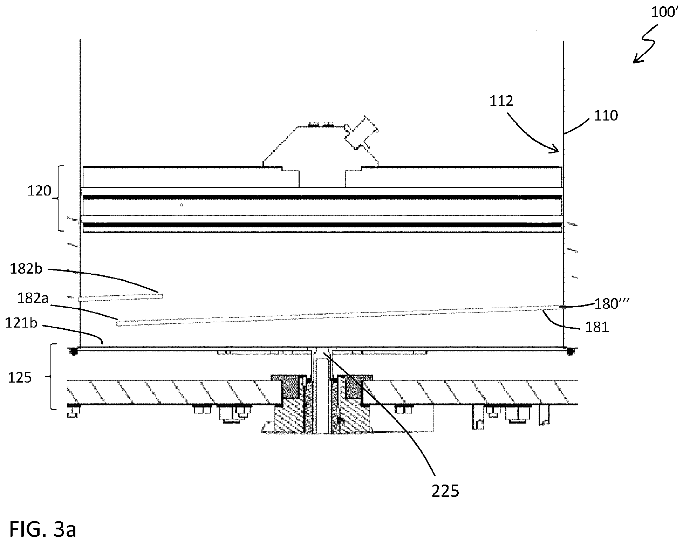

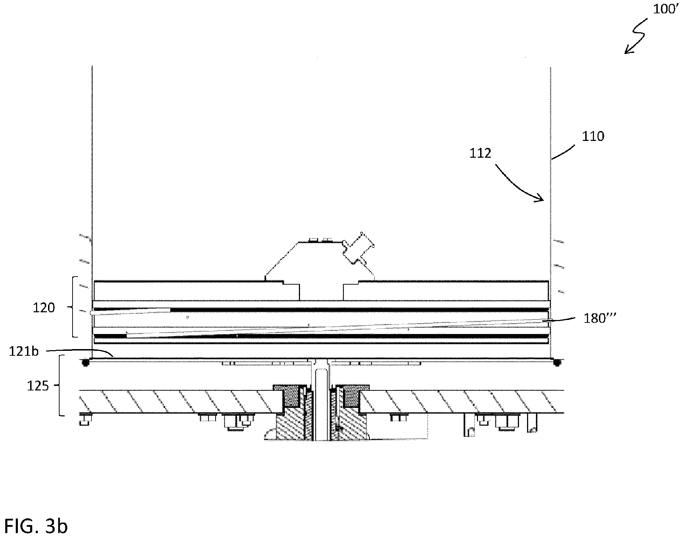

Figure 3a is a cross section of a chromatography column 100' according to another embodiment of the invention. Figure 3b is a cross section of the same chromatography column 100' as shown in Figure 3a where the adaptor assembly 120 has been lowered to be in line with the groove 180‴. The only differing feature in this embodiment compared to the embodiment described in relation to Figures 1a and 1b is the design of the groove 180‴. All other features are the same and are given the same reference numbers and will not be described in detail again. In this embodiment the groove 180‴ is a spiral groove 180‴ provided in the inner wall 112 of the tubular side wall 110 of the chromatography column 100'. The groove 180‴ is provided as a continuous spiral groove 180‴ provided around the circumference of the inner wall 112, starting less than 20 cm from the base assembly 125 and ending less than 15 cm from the base assembly 125. As discussed above the distance between the base assembly 125 and the groove 180‴ can be measured between a bottom part 181 of the groove 180‴ and a bottom bed support 121b of the base assembly 125. A lowermost end 182a of the spiral groove 180‴ may be positioned less than 15 cm or in another embodiment less than 10 cm or less than 5 cm from the base assembly 125 or from the bottom bed support 121b of the base assembly 125. An uppermost end 182b of the spiral groove 180‴ may be positioned less than 20 cm or in another embodiment less than 15 cm or less than 10 cm from the base assembly 125 or from the bottom bed support 121b of the base assembly 125. A height difference along the column between the lowermost end 182a and the uppermost end 182b can be for example between 2-10 cm depending on the distance between the two sealing arrangements 160a, 160b of the adapter assembly 120. The height difference between the lowermost end 182a and the uppermost end 182b should be smaller than the distance between the two sealing arrangements 160a, 160b in order to avoid short circuit of fluid over the adaptor assembly 120. The lowermost end 182a and the uppermost end 182b may be overlapping around the circumference of the inner wall 112 by a small distance as seen in Figure 3a.

An advantage with a spiral groove 180‴ is that a process for unpacking chromatography media from the chromatography column can be improved. This unpacking process is further described below. Furthermore, priming may be more effective with a spiral groove thanks to a possibility to provide a higher flow over a smaller part of an outer periphery of the lower sealing arrangement 160b since fluid flow is only passing the lower sealing arrangement 160b where the spiral groove intersects with the lower sealing arrangement 160b which will be different for different positions of the adaptor assembly 120.

According to the invention a method for unpacking a chromatography column is also provided. The method steps of this method are illustrated in the flow chart of Figure 7. The method steps are described in order below:
A1: Resuspending a packed bed of chromatography media provided in said chromatography column 100; 100' by providing a fluid to said bed space 130. This fluid is provided from a mobile phase bottom which is not seen in these views of the chromatography column, but which is provided in a bottom of the column.
A2: Removing resuspended chromatography media via a chromatography media outlet of the chromatography column 100; 100'.
A3: Lowering the adaptor assembly 120 to a position within the tubular side wall 110 such that the adaptor assembly 120 is in line with the at least one groove 180; 180'; 180''; 180‴. This could be the priming position mentioned above where the lower sealing assembly 160b intersects with at least a part of the at least one groove 180; 180'; 180‴ (depending on if the groove is a spiral groove or not).
A4: Flowing a fluid through at least one priming fluid passage 171 which is provided passing through the adaptor assembly 120, whereby said fluid will be flowed out through a first end opening 172 of each of the at least one priming fluid passage 171 and via said at least one groove 180; 180'; 180"; 180‴ into the bed space 130 for resuspending any remaining chromatography media in the bed space.
A5: Removing resuspended chromatography media via the chromatography media outlet.

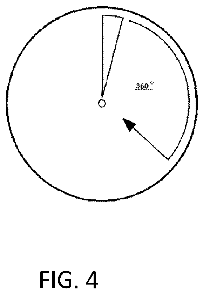

The step A4 of flowing a fluid through the at least one priming fluid passage 171, may comprise the simultaneously movement of the adaptor assembly 120 axially within the tubular side wall 110. This is advantageous in embodiments where the groove is a spiral groove 180‴. Hereby the adaptor assembly 120 is moved over a distance of the tubular side wall 110 where the groove 180‴ is provided, whereby the flow of fluid out through the at least one first end opening 172 of the at least one priming fluid passage 171 will be transferred out via the spiral groove 180‴ into the bed space 130 from different directions depending on the position of the adaptor assembly 120. This is illustrated in Figure 4 which shows schematically a movable flow path around a bed support surface depending on the height of the adaptor assembly 120 where the groove is a spiral groove 180‴. A chromatography media outlet 225 is provided in the middle of the base assembly 125 through which chromatography media is removed. The fluid flow is provided from different positions around the circumference of the column wall depending on adaptor assembly position. By moving the adaptor assembly 120 the fluid flow can be provided from all angles around the circle and an effective unpacking can be provided.

Figure 5 is a perspective view of an adaptor assembly 120 according to one embodiment of the invention. In this embodiment of the invention a number of priming fluid passages 171 are provided through the adaptor assembly 120 and the first end openings 172 of each of said priming fluid passages 171 are distributed around the circumference of the adaptor assembly 120. The fluid passages 171 can be connected to a fluid source via one or more tubing 401. The upper O-ring 161a and the lower O-ring 161b and the upper scraper 163a and the lower scraper 163b can also be seen in this view. By providing a number of priming fluid passages 171 through the adaptor assembly 120 a flow of fluid can be provided out through the first end openings 172 of the priming fluid passages 171 when the adaptor assembly 120 is positioned inside the tubular side wall 110 of the column 100 in line with the groove 180 and hereby a fluid flow can be provided in towards a centre of the bed space from different positions of the circumference of the adaptor assembly, via the groove 180; 180‴. Hereby any remaining chromatography material can be effectively removed. If the groove furthermore is provided as a spiral groove 180‴ the rinsing effectiveness can be further improved by moving the adaptor assembly axially within the tubular side wall 110 at the same time as the fluid is flowed out through the priming fluid passages 171.

A combination of providing at least one groove 180, 180', 180'', 180‴ in the inner wall 112 in a low position close to the base assembly 125 and providing at least one and suitably more than one priming fluid passages 171 with first end openings 172 distributed around the circumference of the adaptor assembly 120 is especially advantageous for both effective priming and effective unpacking of the chromatography column.

Various alternative embodiments may also be provided. For example, various standard conventional columns may be modified to provide a priming groove in an upper portion thereof (e.g. in an upper half). Such a groove may be formed as a spiral, and/or with multiple channel (e.g. arcuate, linear, etc.) portions, or the like. Such a modification could thus be used to provide a better chromatographic performance aspect (e.g. packed bed).

## Claims

1. A chromatography column (100; 100') comprising:
a tubular side wall (110) having an inner wall (112);
an adaptor assembly (120); and
a base assembly (125),
wherein an enclosed bed space (130) is defined between said adaptor assembly (120), said base assembly (125) and said inner wall (112) of said tubular side wall (110) and wherein said adaptor assembly (120) is axially movable inside said tubular side wall (110) in relation to said base assembly (125), and **characterised in that:**
the inner wall (112) comprises at least one groove (180; 180'; 180''; 180‴) which is positioned in a lower half of the tubular side wall (110) of the chromatography column (100) closer to the base assembly (125) than to a top part (110a) of the tubular side wall (110), via which at least one groove (180; 180'; 180''; 180‴) air and other fluid can pass the adaptor assembly (120) when the adaptor assembly is positioned in a priming position, in which priming position said adaptor assembly (120) intersects with at least a part of the at least one groove (180; 180'; 180''; 180‴); and
wherein the adaptor assembly (120) comprises at least one priming fluid passage (171) which passes through the adaptor assembly (120), wherein each priming fluid passage (171) has a first end opening (172) which is provided at a position around the circumference of the adaptor assembly (120), whereby if there is more than one priming fluid passage (171) provided, the first end openings (172) for each of the priming fluid passages (171) are distributed around the circumference of the adaptor assembly (120), whereby said at least one priming fluid passage (171) is configured for transferring a fluid between an outside of the chromatography column (100; 100') and a circumference of the adaptor assembly (120).

2. The chromatography column (100; 100') according to claim 1, wherein the at least one groove (180; 180'; 180''; 180‴) is provided within a distance from the base assembly (125) which is less than 20 cm or less than 10 cm.

3. The chromatography column (100; 100') according to claim 1 or 2, wherein the at least one groove (180; 180'; 180''; 180‴) is a continuous groove around the circumference of the inner wall (112).

4. The chromatography column (100; 100') according to claim 1 or 2, wherein there are a number of separate grooves (180'; 180'') distributed around the circumference of the inner wall (112).

5. The chromatography column (100; 100') according to any one of the preceding claims, wherein the at least one groove (180‴) is provided as a spiral groove (180‴) provided around at least a part of the circumference of the inner wall (112).

6. The chromatography column (100; 100') according to claim 5, wherein said spiral groove (180‴) starts less than 20 cm from the base assembly (125) and ends less than 15 cm from the base assembly (125).

7. The chromatography column (100; 100') according to any one of the preceding claims, wherein said at least one first end opening (172) of each of said at least one priming fluid passage (171) is provided between two scrapers (163a, 163b) of the adaptor assembly (120) which scrapers seal against the inner wall (112) of the tubular side wall (110) of the chromatography column (100; 100').

8. A method for priming a chromatography column (100; 100') according to any one of the preceding claims, said method comprising the steps of:
a) lowering the adaptor assembly (120) to a priming position within the tubular side wall (110) such that the adaptor assembly (120) intersects with at least a part of the at least one groove (180; 180'; 180"; 180‴) of the inner wall (112) such that air and other fluid can pass the adaptor assembly (120) via said at least one groove (180; 180'; 180"; 180‴);
b) providing a priming liquid to fill up the enclosed bed space (130) with priming liquid;
c) removing air by providing more priming liquid to the enclosed bed space (130) such that air can pass the adaptor assembly (120) via the at least one groove (180; 180'; 180''; 180‴) and/or by lowering the adaptor assembly (120) axially within the tubular side wall (110) such that air can be pressed out via the at least one groove (180; 180'; 180"; 180‴).

9. The method according to claim 8, wherein the method comprises a further step d) which is performed after step c), wherein said step d) comprises raising the adaptor assembly (120) axially within the tubular side wall (110) away from the base assembly (125) such that the adaptor assembly (120) is removed from the at least one groove (180; 180'; 180''; 180‴) whereby no more air or other fluid can pass the adaptor assembly (120).

10. A method for unpacking the chromatography column (100; 100') according to any one of the claims 1 to 7, wherein said method comprises the steps of:
resuspending a packed bed of chromatography media provided in said chromatography column (100; 100') by providing a fluid to said bed space (130);
removing resuspended chromatography media via a chromatography media outlet (225) of the chromatography column;
lowering the adaptor assembly (120) to a position within the tubular side wall (110) such that the adaptor assembly (120) intersects with at least a part of the at least one groove (180; 180'; 180''; 180‴);
flowing a fluid through at least one priming fluid passage (171) which is provided passing through the adaptor assembly (120), whereby said fluid will be flowed out through a first end opening (172) of each of the at least one priming fluid passage (171) and via said groove (180; 180'; 180''; 180‴) into the bed space (130) for resuspending any remaining chromatography media in the bed space; and
removing resuspended chromatography media via the chromatography media outlet (225).

11. The method according to claim 10, wherein the step of flowing a fluid through the at least one priming fluid passage (171) further comprises simultaneously moving the adaptor assembly (120) axially within the tubular side wall (110) such that the adaptor assembly (120) passes over a distance where the groove (180‴) is provided, wherein the groove is provided as a spiral groove (180‴), whereby the flow of fluid out through the at least one first end openings (172) is transferred out via the spiral groove (180‴) into the bed space (130) from different directions depending on the position of the adaptor assembly (120).

## Patentansprüche

1. Chromatographiesäule (100; 100'), umfassend:
eine rohrförmige Seitenwand (110), die eine Innenwand (112) aufweist;
eine Adapteranordnung (120); und
eine Basisanordnung (125),
wobei ein umschlossener Bettraum (130) zwischen der Adapteranordnung (120), der Basisanordnung (125) und der Innenwand (112) der rohrförmigen Seitenwand (110) definiert ist und wobei die Adapteranordnung (120) innerhalb der rohrförmigen Seitenwand (110) in Bezug auf die Basisanordnung (125) axial beweglich ist, und **dadurch gekennzeichnet, dass:**
die Innenwand (112) mindestens eine Nut (180; 180'; 180"; 180‴) umfasst, die in einer unteren Hälfte der rohrförmigen Seitenwand (110) der Chromatographiesäule (100) näher an der Basisanordnung (125) als an einem oberen Teil (110a) der rohrförmigen Seitenwand (110) positioniert ist,
wobei über die mindestens eine Nut (180; 180'; 180"; 180‴) Luft und anderes Fluid die Adapteranordnung (120) passieren kann, wenn die Adapteranordnung in einer Befüllungsposition positioniert ist, wobei die Adapteranordnung (120) in dieser Befüllungsposition mindestens einen Teil der mindestens einen Nut (180; 180'; 180"; 180‴) schneidet; und
wobei die Adapteranordnung (120) mindestens einen Befüllungsfluidpassage (171) umfasst, der durch die Adapteranordnung (120) passiert, wobei jede Befüllungsfluidpassage (171) eine erste Endöffnung (172) aufweist, die an einer Position um den Umfang der Adapteranordnung (120) herum bereitgestellt ist, wobei, wenn mehr als eine Befüllungsfluidpassage (171) bereitgestellt ist, die ersten Endöffnungen (172) für jeden der Befüllungsfluidpassagen (171) um den Umfang der Adapteranordnung (120) herum verteilt sind, wobei die mindestens eine Befüllungsfluidpassage (171) zum Übertragen eines Fluids zwischen einer Außenseite der Chromatographiesäule (100; 100') und einem Umfang der Adapteranordnung (120) konfiguriert ist.

2. Chromatographiesäule (100; 100') nach Anspruch 1, wobei die mindestens eine Nut (180; 180'; 180"; 180‴) in einem Abstand von der Basisanordnung (125) bereitgestellt ist, der weniger als 20 cm oder weniger als 10 cm beträgt.

3. Chromatographiesäule (100; 100') nach Anspruch 1 oder 2, wobei die mindestens eine Nut (180; 180'; 180"; 180‴) eine durchgehende Nut um den Umfang der Innenwand (112) herum ist.

4. Chromatographiesäule (100; 100') nach Anspruch 1 oder 2, wobei eine Anzahl von separaten Nuten (180'; 180") um den Umfang der Innenwand (112) herum verteilt sind.

5. Chromatographiesäule (100; 100') nach einem der vorstehenden Ansprüche, wobei die mindestens eine Nut (180‴) als eine spiralförmige Nut (180‴) bereitgestellt ist, die um mindestens einen Teil des Umfangs der Innenwand (112) bereitgestellt ist.

6. Chromatographiesäule (100; 100') nach Anspruch 5, wobei die spiralförmige Nut (180‴) weniger als 20 cm von der Basisanordnung (125) beginnt und weniger als 15 cm von der Basisanordnung (125) endet.

7. Chromatographiesäule (100; 100') nach einem der vorstehenden Ansprüche, wobei die mindestens eine erste Endöffnung (172) jede der mindestens einen Befüllungsfluidpassage (171) zwischen zwei Abstreifern (163a, 163b) der Adapteranordnung (120) bereitgestellt ist, wobei die Abstreifer gegen die Innenwand (112) der rohrförmigen Seitenwand (110) der Chromatographiesäule (100; 100') abdichten.

8. Verfahren zum Befüllen einer Chromatographiesäule (100; 100') nach einem der vorstehenden Ansprüche, wobei das Verfahren die folgenden Schritte umfasst:
a) Absenken der Adapteranordnung (120) in eine Befüllungsposition innerhalb der rohrförmigen Seitenwand (110), so dass die Adapteranordnung (120) mindestens einen Teil der mindestens einen Nut (180; 180'; 180"; 180"') der Innenwand (112) schneidet, so dass Luft und anderes Fluid die Adapteranordnung (120) über die mindestens eine Nut (180; 180'; 180"; 180‴) passieren kann;
b) Bereitstellen einer Befüllungsflüssigkeit, um den eingeschlossenen Bettraum (130) mit Befüllungsflüssigkeit aufzufüllen;
c) Entfernen von Luft, indem dem eingeschlossenen Bettraum (130) mehr Befüllungsflüssigkeit bereitgestellt wird, so dass Luft die Adapteranordnung (120) über die mindestens eine Nut (180; 180'; 180"; 180"') passieren kann, und/oder indem die Adapteranordnung (120) axial innerhalb der rohrförmigen Seitenwand (110) abgesenkt wird, so dass Luft über die mindestens eine Nut (180; 180'; 180"; 180‴) herausgedrückt werden kann.

9. Verfahren nach Anspruch 8, wobei das Verfahren einen weiteren Schritt d) umfasst, der nach Schritt c) durchgeführt wird, wobei der Schritt d) das axiale Anheben der Adapteranordnung (120) innerhalb der rohrförmigen Seitenwand (110) von der Basisanordnung (125) weg umfasst, so dass die Adapteranordnung (120) aus der mindestens einen Nut (180; 180'; 180"; 180‴) entfernt wird, wodurch keine Luft oder andere Flüssigkeit mehr die Adapteranordnung (120) passieren kann.

10. Verfahren zum Entpacken der Chromatographiesäule (100; 100') nach einem der Ansprüche 1 bis 7, wobei das Verfahren die folgenden Schritte umfasst:
Resuspendieren eines gepackten Bettes von Chromatographiemedien, das in der Chromatographiesäule (100; 100') bereitgestellt ist, durch Zuführen eines Fluids zu dem Bettraum (130);
Entfernen der resuspendierten Chromatographiemedien über einen Chromatographiemedien-Auslass (225) der Chromatographiesäule;
Absenken der Adapteranordnung (120) in eine Position innerhalb der rohrförmigen Seitenwand (110), so dass die Adapteranordnung (120) mindestens einen Teil der mindestens einen Nut (180; 180'; 180"; 180‴) schneidet;
Strömenlassen eines Fluids durch mindestens einen Befüllungsfluidpassage (171), der durch die Adapteranordnung (120) hindurch bereitgestellt ist, wodurch das Fluid durch eine erste Endöffnung (172) jedes des mindestens einen Befüllungsfluidpassagees (171) und über die Nut (180; 180'; 180"; 180"') in den Bettraum (130) zum Resuspendieren etwaiger verbleibender Chromatographiemedien in dem Bettraum strömt; und
Entfernen der resuspendierten Chromatographiemedien über den Chromatographiemedien-Auslass (225).

11. Verfahren nach Anspruch 10, wobei der Schritt des Strömenlassens eines Fluids durch den mindestens einen Befüllungsfluidpassage (171) weiter das gleichzeitige Bewegen der Adapteranordnung (120) axial innerhalb der rohrförmigen Seitenwand (110) umfasst, so dass die Adapteranordnung (120) über eine Strecke passiert, in der die Nut (180"') bereitgestellt ist, wobei die Nut als eine spiralförmige Nut (180"') bereitgestellt ist, wodurch der Fluidstrom aus der mindestens einen ersten Endöffnung (172) über die spiralförmige Nut (180‴) in den Bettraum (130) aus verschiedenen Richtungen in Abhängigkeit von der Position der Adapteranordnung (120) übertragen wird.

## Revendications

1. Colonne de chromatographie (100 ; 100') comprenant :
une paroi latérale tubulaire (110) présentant une paroi interne (112) ;
un ensemble adaptateur (120) ; et
un ensemble base (125),
dans laquelle un espace de lit fermé (130) est délimité entre ledit ensemble adaptateur (120), ledit ensemble base (125) et ladite paroi interne (112) de ladite paroi latérale tubulaire (110) et dans laquelle ledit ensemble adaptateur (120) est axialement mobile à l'intérieur de ladite paroi latérale tubulaire (110) par rapport audit ensemble base (125), et **caractérisée en ce que** :
la paroi interne (112) comprend au moins une rainure (180 ; 180' ; 180" ; 180"') qui est positionnée dans une moitié intérieure de la paroi latérale tubulaire (110) de la colonne de chromatographie (100) plus près de l'ensemble base (125) que d'une partie supérieure (110a) de la paroi latérale tubulaire (110), via laquelle au moins une rainure (180 ; 180' ; 180" ; 180"') de l'air et un autre fluide peuvent traverser l'ensemble adaptateur (120) lorsque l'ensemble adaptateur est positionné dans une position d'amorçage, dans laquelle position d'amorçage ledit ensemble adaptateur (120) croise au moins une partie de la au moins une rainure (180 ; 180' ; 180" ; 180"') ; et
dans laquelle l'ensemble adaptateur (120) comprend au moins un passage (171) pour fluide d'amorçage qui traverse l'ensemble adaptateur (120), dans laquelle chaque passage (171) pour fluide d'amorçage présente une première ouverture d'extrémité (172) qui est disposée à une position autour de la circonférence de l'ensemble adaptateur (120), de telle sorte que, s'il est prévu plus d'un passage (171) pour fluide d'amorçage, les premières ouvertures d'extrémité (172) pour chacun des passages (171) pour fluide d'amorçage sont réparties autour de la circonférence de l'ensemble adaptateur (120), de telle sorte que ledit au moins un passage (171) pour fluide d'amorçage est configuré pour transférer un fluide entre un extérieur de la colonne de chromatographie (100 ; 100') et une circumference de l'ensemble adaptateur (120).

2. Colonne de chromatographie (100 ; 100') selon la revendication 1, dans laquelle la au moins une rainure (180 ; 180' ; 180" ; 180‴) est disposée à une distance de l'ensemble base (125) qui est inférieure à 20 cm ou inférieure à 10 cm.

3. Colonne de chromatographie (100 ; 100') selon la revendication 1 ou revendication 2, dans laquelle la au moins une rainure (180 ; 180'; 180" ; 180‴) est une rainure continue autour de la circumference de la paroi interne (112).

4. Colonne de chromatographie (100; 100') selon la revendication 1 ou revendication 2, dans laquelle il y a un certain nombre de rainures séparées (180' ; 180") réparties autour de la circumference de la paroi interne (112).

5. Colonne de chromatographie (100 ; 100') selon l'une quelconque des revendications précédentes, dans laquelle la au moins une rainure (180"') est prévue en tant que rainure en spirale (180"') disposée autour d'au moins une partie de la circumference de la paroi interne (112).

6. Colonne de chromatographie (100 ; 100') selon la revendication 5, dans laquelle ladite rainure en spirale (180"') démarre à moins de 20 cm de l'ensemble base (125) et finit à moins de 15 cm de l'ensemble base (125).

7. Colonne de chromatographie (100 ; 100') selon l'une quelconque des revendications précédentes, dans laquelle ladite au moins une première ouverture d'extrémité (172) de chacun dudit au moins un passage (171) pour fluide d'amorçage est disposée entre deux racloirs (163a, 163b) de l'ensemble adaptateur (120), lesquels racloirs créent une étanchité contre la paroi interne (112) de la paroi latérale tubulaire (110) de la colonne de chromatographie (100 ; 100').

8. Procédé d'amorçage d'une colonne de chromatographie (100 ; 100') selon l'une quelconque des revendications précédentes, ledit procédé comprenant les étapes consistant à :
a) abaisser l'ensemble adaptateur (120) à une position d'amorçage dans la paroi latérale tubulaire (110) de telle sorte que l'ensemble adaptateur (120) croise au moins une partie de la au moins une rainure (180 ; 180' ; 180" ; 180"') de la paroi interne (112) de telle sorte que de l'air et un autre fluide peuvent traverser l'ensemble adaptateur (120) via ladite au moins une rainure (180 ; 180' ; 180" ; 180"') ;
b) fournir un liquide d'amorçage pour remplir l'espace de lit fermé (130) avec un liquide d'amorçage ;
c) retirer l'air en fournissant plus de liquide d'amorçage à l'espace de lit fermé (130) de telle sorte que de l'air peut traverser l'ensemble adaptateur (120) via la au moins une rainure (180 ; 180' ; 180" ; 180"') et/ou en abaissant l'ensemble adaptateur (120) axialement dans la paroi latérale tubulaire (110) de telle sorte que de l'air peut être pressé à l'extérieur via la au moins une rainure (180 ; 180' ; 180" ; 180"').

9. Procédé selon la revendication 8, dans lequel le procédé comprend une étape supplémentaire d) qui est mise en œuvre après l'étape c), dans lequel ladite étape d) comprend le levage de l'ensemble adaptateur (120) axialement dans la paroi latérale tubulaire (110) loin de l'ensemble base (125) de telle sorte que l'ensemble adaptateur (120) est retiré de la au moins une rainure (180 ; 180' ; 180" ; 180‴) de telle sorte que plus d'air ou plus d'autre fluide ne peut traverser l'ensemble adaptateur (120).

10. Procédé de décompactage de la colonne de chromatographie (100 ; 100') selon l'une quelconque des revendications 1 à 7, dans lequel ledit procédé comprend les étapes consistant à :
resuspendre un lit compacté de milieux de chromatographie disposés dans ladite colonne de chromatographie (100 ; 100') en fournissant un fluide audit espace de lit (130) ;
retirer les milieux de chromatographie resuspendus via une sortie (225) de milieux de chromatographie de la colonne de chromatographie ;
abaisser l'ensemble adaptateur (120) à une position dans la paroi latérale tubulaire (110) de telle sorte que l'ensemble adaptateur (120) croise au moins une partie de la au moins une rainure (180 ; 180' ; 180" ; 180"') ;
faire s'écouler un fluide dans au moins un passage (171) pour fluide d'amorçage qui est disposé traversant l'ensemble adaptateur (120), de telle sorte que ledit fluide sortira par écoulement par une première ouverture d'extrémité (172) de chacun du au moins un passage (171) pour fluide d'amorçage et via ladite rainure (180 ; 180' ; 180" ; 180‴) dans l'espace de lit (130) pour resuspendre tout milieu de chromatographierestant dans l'espace de lit ; et
retirer les milieux de chromatographie resuspendus via la sortie (225) de milieux de chromatographie.

11. Procédé selon la revendication 10, dans lequel l'étape d'écoulement d'un fluide par le au moins un passage (171) pour fluide d'amorçage comprend en outre le déplacement simultané de l'ensemble adaptateur (120) axialement dans la paroi latérale tubulaire (110) de telle sorte que l'ensemble adaptateur (120) franchit une distance est disposée la rainure (180"'), dans laquelle la rainure est prévue en tant que rainure en spirale (180‴), de telle sorte que l'écoulement de fluide sortant par la au moins une première ouverture d'extrémité (172) est transféré via la rainure en spirale (180"') dans l'espace de lit (130) depuis différentes directions en fonction de la position de l'ensemble adaptateur (120).
